# EUROPÄISCHE PATENTSCHRIFT

(11) **EP 4 172 567 B1**
(45) Veröffentlichungstag und Bekanntmachung des Hinweises auf die Patenterteilung: **08.04.2026**
(21) Anmeldenummer: 21742723.6
(22) Anmeldetag: 17.06.2021
(51) Int. Cl.: G01C 22/00, G01B 3/12, G01V 3/15, G01S 7/02, G01S 13/42

(54) **HANDHALTBARES MATERIALUNTERSUCHUNGSGERÄT MIT EINER POSITIONSERMITTLUNGSVORRICHTUNG UND VERFAHREN ZUM BETRIEB DER POSITIONSERMITTLUNGSVORRICHTUNG**
HAND-HELD MATERIAL TESTING APPARATUS WITH A POSITION-DETERMINING DEVICE AND METHOD FOR OPERATING THE POSITON-DETERMINING DEVICE
APPAREIL DE TEST DE MATÉRIAU MANUEL DOTÉ D'UN DISPOSITIF DE DÉTERMINATION DE POSITION ET PROCÉDÉ DE FONCTIONNEMENT DU DISPOSITIF DE DÉTERMINATION DE POSITION

(30) Priorität: 30.06.2020 DE 102020208101
(43) Veröffentlichungstag der Anmeldung: 03.05.2023
(73) Patentinhaber: Robert Bosch GmbH, 70442 Stuttgart (DE)
(72) Erfinder: SGARZ, Heiko, 71229 Leonberg (DE); POHLMANN, Martin, 70567 Stuttgart (DE); HUEMBERT, Frank, 70597 Stuttgart (DE); ROEHM, Tobias, 72218 Wildberg-Sulz (DE)
(86) Internationale Anmeldenummer: PCT/EP2021/066380
(87) Internationale Veröffentlichungsnummer: WO 2022/002609

(56) Entgegenhaltungen:
- DE-A1- 102016 223 996
- DE-A1- 19 845 952

## Beschreibung

### Stand der Technik

Es ist bereits eine Positionsermittlungsvorrichtung für ein handhaltbares Materialuntersuchungsgerät vorgeschlagen worden, die zu einer Erfassung eines durch das Materialuntersuchungsgerät zurückgelegten Wegs eingerichtet ist und zumindest eine Signalgebereinheit zu einer Anordnung an einem Wälzelement des Materialuntersuchungsgeräts und zumindest eine Sensoreinheit umfasst, wobei die Signalgebereinheit zumindest ein Signalgeberelement zu einer Änderung eines Messsignals in Abhängigkeit von einer Drehposition des Wälzelements umfasst und wobei die Sensoreinheit zu einer Anordnung an einem Fahrgestell des Materialuntersuchungsgeräts und zu einer Erfassung des Messsignals vorgesehen ist

DE 10 2016 223996 A1 offenbart ein handgehaltenes Detektionsgerät, das aus zumindest einem Grundkörper, der zumindest eine Detektionsvorrichtung umfasst, besteht.

Aus der DE 198 45 952 A1 ist eine Vorrichtung zur Wegstreckenmessung bei Rollschuhen ("Inline Skates") bekannt.

### Offenbarung der Erfindung

Die Erfindung betrifft ein handhaltbares Materialuntersuchungsgerät gemäß Anspruch 1 sowie ein Verfahren zum Betrieb einer Positionsermittungsvorrichtung für ein ebensolches gemäß Anspruch 9. Vorteilhafte Ausführungsformen ergeben sich aus den abhängigen Ansprüchen.

Die Erfindung geht aus von Positionsermittlungsvorrichtung für ein handhaltbares Materialuntersuchungsgerät, die zu einer Erfassung eines durch das Materialuntersuchungsgerät zurückgelegten Wegs eingerichtet ist und zumindest eine Signalgebereinheit zu einer Anordnung an einem Wälzelement des Materialuntersuchungsgeräts und zumindest eine Sensoreinheit umfasst, wobei die Signalgebereinheit zumindest ein Signalgeberelement zu einer Änderung eines Messsignals in Abhängigkeit von einer Drehposition des Wälzelements umfasst und wobei die Sensoreinheit zu einer Anordnung an einem Fahrgestell des Materialuntersuchungsgeräts und zu einer Erfassung des Messsignals vorgesehen ist.

Es wird vorgeschlagen, dass das Signalgeberelement als induktives Signalgeberelement und die Sensoreinheit als induktive Sensoreinheit ausgebildet sind, welche zu einer induktiven Kopplung miteinander eingerichtet sind. Das Materialuntersuchungsgerät umfasst vorzugsweise eine Ortungssensoreinheit, insbesondere eine Antenneneinheit, welche dazu vorgesehen ist, als Messsignale elektromagnetische Wellen, insbesondere im Mikrowellenbereich und/oder im Radiowellenbereich, auszusenden und zu empfangen. Insbesondere ist die Ortungssensoreinheit dazu vorgesehen, einen zurückgestreuten, insbesondere zurückreflektierten, Anteil der ausgesandten Messsignale zu empfangen. Das Materialuntersuchungsgerät ist insbesondere dazu vorgesehen, zu einer Messung, insbesondere von einem Benutzer, an einer Oberfläche eines Untersuchungsobjekts angeordnet zu werden und optional relativ zu der Oberfläche verschoben zu werden, insbesondere unter Beibehaltung eines Kontakts des Materialuntersuchungsgeräts mit der Oberfläche. Vorzugsweise umfasst das Materialuntersuchungsgerät das zumindest eine Wälzelement, insbesondere ein Rad, eine Walze, eine Kugel o. dgl., zu einer Anordnung des Materialuntersuchungsgeräts an der Oberfläche und/oder zu einer Bewegung des Materialuntersuchungsgeräts relativ zur Oberfläche. Besonders bevorzugt umfasst das Materialuntersuchungsgerät zumindest ein weiteres Wälzelement. Vorzugsweise umfasst das Materialuntersuchungsgerät mehrere, insbesondere mehr als drei, Wälzelemente. Insbesondere sind die Wälzelemente dazu vorgesehen, während einer Messung mit dem Materialuntersuchungsgerät einen, insbesondere konstanten, minimalen Abstand der Oberfläche von dem Fahrgestell und insbesondere von der Ortungssensoreinheit festzulegen. Das Materialuntersuchungsgerät umfasst vorzugsweise ein Gehäuse, in oder an welchem die Ortungssensoreinheit angeordnet ist. Das Fahrgestell ist bevorzugt als Teil des Gehäuses ausgebildet. Alternativ ist das Fahrgestell separat von dem Gehäuse ausgebildet, wobei das Fahrgestell zu einer Montage an und/oder in dem Gehäuse ausgebildet ist. Insbesondere ist das Wälzelement an dem Fahrgestell drehbar gelagert. Die Positionsermittlungsvorrichtung umfasst vorzugsweise zumindest eine physische Drehachse, welche zu einer mit dem Wälzelement drehfesten Anordnung an dem Wälzelement vorgesehen ist. Insbesondere gibt die Drehachse in einem an dem Fahrgestell angeordneten Zustand eine gedachte Rotationsachse vor, um welche das Wälzelement drehen kann. Vorzugsweise ist die Rotationsachse in einem an dem Fahrgestell gelagerten Zustand zumindest im Wesentlichen parallel zu einer Längsachse des Gehäuses. Alternativ ist die Rotationsachse in einem an dem Fahrgestell gelagerten Zustand zumindest im Wesentlichen senkrecht zu der Längsachse angeordnet oder derart ausrichtbar. Die Drehachse kann als Lagerachse, welche insbesondere nicht zu einer Kraft- und/oder Drehmomentübertragung vorgesehen ist, und/oder als Welle ausgebildet sein.

Unter "vorgesehen" soll insbesondere speziell eingerichtet, speziell programmiert, speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist.

Die Signalgebereinheit und die Sensoreinheit bilden zusammen insbesondere ein Odometer zu einer Positionserfassung des Materialuntersuchungsgeräts mittels einer Erfassung eines Abwälzens zumindest eines der Wälzelemente, besonders bevorzugt von zumindest zwei, der Wälzelemente auf der Oberfläche des Untersuchungsobjekts. Die Signalgebereinheit und die Sensoreinheit sind insbesondere beabstandet und insbesondere relativ zueinander beweglich, insbesondere drehbar, angeordnet. Insbesondere sind die Signalgebereinheit und die Sensoreinheit zusammen dazu vorgesehen, ein Messsignal, das von der Drehposition des Wälzelements abhängt, zu erzeugen. Besonders bevorzugt ist die Signalgebereinheit dazu vorgesehen, ein Magnetfeld zu erzeugen, und die Sensoreinheit ist dazu vorgesehen, dieses Magnetfeld als Messsignal zu erfassen. Alternativ ist die Sensoreinheit dazu vorgesehen, ein Magnetfeld zu erzeugen und eine Feldveränderung, insbesondere eine Absorption, dieses Magnetfelds durch die Signalgebereinheit als Messsignal zu erfassen. Bevorzugt ist das Signalgeberelement, insbesondere zu einer Aussendung des Messsignals, als Permanentmagnet ausgebildet. Alternativ ist das Signalgeberelement, insbesondere zu einer Aussendung des Messsignals, als Elektromagnet ausgebildet, welcher mittels einer Batterie, eines Superkondensators o. dgl. der Signalgebereinheit betrieben wird. Alternativ ist das Signalgeberelement als Leiterschlaufe ausgebildet, welche insbesondere zu einer resonanten Absorption eines Wechselmagnetfeldes von der, insbesondere einen Resonanzschwingkreis aufweisenden, Sensoreinheit eingerichtet ist.

Vorzugsweise ist die Signalgebereinheit drehfest mit dem Wälzelement verbunden. Insbesondere ist das Signalgeberelement an der Drehachse angeordnet. Das Signalgeberelement kann als Dipolmagnet oder als Multipolmagnet ausgebildet sein. Insbesondere umfasst das Signalgeberelement zumindest eine gedachte Magnetachse, auf welcher ein magnetischer Nordpol und ein magnetischer Südpol des Signalgeberelements angeordnet sind. Insbesondere ist die Magnetachse zumindest im Wesentlichen senkrecht zu der Rotationsachse des Wälzelements angeordnet. Die Sensoreinheit umfasst insbesondere zumindest einen Magnetfeldmesser. Der Magnetfeldmesser ist beispielsweise als elektromagnetische Spule, insbesondere mit elektrischem Strom- und/oder Spannungsmesser, als Hallsonde, als Feldplatte o. dgl. ausgebildet.

Durch die erfindungsgemäße Ausgestaltung können die Sensoreinheit und die Signalgebereinheit vorteilhaft ohne Notwendigkeit einer optischen Sichtlinie zueinander angeordnet werden. Insbesondere ist die Positionsermittlungsvorrichtung vorteilhaft unempfindlich gegenüber einer Verschmutzung und/oder einer Umgebungshelligkeit.

Weiter wird vorgeschlagen, dass die Signalgebereinheit eine, insbesondere die bereits genannte, eine Drehbewegung des Wälzelements vorgebende Drehachse umfasst, in welche das Signalgeberelement in radialer Richtung der Drehachse maximal im Wesentlichen bündig integriert ist. Unter einer "radialen Richtung der Drehachse" soll insbesondere eine von der Rotationsachse ausgehende Richtung in einer Ebene senkrecht zur Rotationsachse verstanden werden. Vorzugsweise ist eine Signalgeberebene der Signalgebereinheit senkrecht zu der Rotationsachse und schneidet das Signalgeberelement. Vorzugsweise umfasst die Drehachse zumindest eine Signalgeberaufnahme zu einer Aufnahme des Signalgeberelements. Bevorzugt umgibt eine Wandung der Signalgeberaufname das Signalgeberelement in der Signalgeberebene, insbesondere vollständig. Alternativ ist das Signalgeberelement in radialer Richtung in einer Außenwandung der Drehachse eingelassen und/oder über die Drehachse übergestülpt. Unter "im wesentlichen bündig" soll insbesondere bündig bis auf einen Toleranzwert von weniger als 15 %, bevorzugt von weniger als 5 %, besonders bevorzugt von weniger als 1 %, bündig verstanden werden. Der Toleranzwert ist insbesondere ein Verhältnis eines über die Drehachse in radialer Richtung hinausragenden Teils des Signalgeberelements relativ zu einer maximalen Erstreckung der Drehachse oder des Signalgeberelements in der Signalgeberebene. Unter "maximal im Wesentlichen bündig" soll insbesondere verstanden werden, dass das Signalgeberelement im Wesentlichen bündig mit der Außenwandung der Drehachse angeordnet ist oder relativ zu der Außenwandung der Drehachse in Richtung der Rotationsachse versetzt angeordnet ist, insbesondere im Inneren der Drehachse angeordnet ist. Insbesondere weist ein kleinster gedachter Kreis, welcher in der Signalgeberebene die Drehachse und das Signalgeberelement vollständig umfasst, einen Durchmesser auf, der höchstens um den Toleranzwert größer ist als ein kleinster gedachter Kreis in derselben Ebene, der nur die Drehachse vollständig umfasst. Durch die Ausgestaltung kann das Signalgeberelement vorteilhaft geschützt an der Drehachse angeordnet werden. Insbesondere kann eine Lageraufnahme des Fahrgestells zu einer Aufnahme der Drehachse vorteilhaft klein ausfallen. Insbesondere kann die Drehachse mit dem Signalgeberelement zu einer Montage der Signalgebereinheit von außerhalb des Fahrgestells durch die Lageraufnahme des Fahrgestells hindurch geführt werden, insbesondere auch bei geschlossenem Gehäuse.

Ferner wird vorgeschlagen, dass die Signalgebereinheit eine, insbesondere die bereits genannte, eine Drehbewegung des Wälzelements vorgebende Drehachse umfasst, an welcher das Signalgeberelement angeordnet ist und welche als Achsstumpf ausgebildet ist. Insbesondere umfasst die Drehachse entlang der Rotationsachse einen Wälzabschnitt zu einer Anordnung zumindest des Wälzelements und optional mehrere Zusatzwälzelemente, beispielsweise als Doppelrolle o. dgl. Insbesondere weist die Drehachse entlang der Rotationsachse einen Lagerabschnitt zu einer Lagerung der Drehachse an dem Fahrgestell auf. Vorzugsweise umfasst die Drehachse entlang der Rotationsachse einen Endabschnitt auf, der dazu vorgesehen ist in das Fahrgestell, insbesondere das Gehäuse, hineinzuragen, insbesondere bei einer Montage dort hineingesteckt zu werden. Vorzugsweise ist die Sensoreinheit beabstandet von dem Endabschnitt auf der Rotationsachse angeordnet. Alternativ ist die Sensoreinheit in der Signalgeberebene angeordnet und umgibt optional die Drehachse in der Signalgeberebene. Insbesondere ist das Wälzelement zu einer von dem weiteren Wälzelement unabhängigen Drehbewegung eingerichtet. Insbesondere sind alle Wälzelemente, die mit derselben Drehachse drehfest verbunden sind, in demselben Wälzabschnitt, insbesondere auf derselben Seite des Fahrgestells, angeordnet. Insbesondere ist an jeder Drehachse genau ein Wälzelement angeordnet. Insbesondere sind Drehachsen beabstandet voneinander angeordnet, insbesondere nicht miteinander gekoppelt. Durch die Ausgestaltung kann der Endabschnitt der Drehachse vorteilhaft zu einer Anordnung des Signalgeberelements genutzt werden. Insbesondere kann eine Montage der Drehachse und des Signalgeberelements an dem Fahrgestell vorteilhaft einfach ausgeführt werden. Insbesondere kann auf ein Einfädeln der Drehachse in eine zweite Lageraufnahme des Fahrgestells verzichtet werden. Ferner kann das Materialuntersuchungsgerät vorteilhaft auch auf unebenem Untergrund vorteilhaft zuverlässig verfahren werden.

Weiterhin wird vorgeschlagen, dass die Signalgebereinheit eine, insbesondere die bereits genannte, eine Drehbewegung des Wälzelements vorgebende Drehachse umfasst, welche mit dem Wälzelement einstückig ausgebildet ist, wobei das Signalgeberelement an einem von dem Wälzelement abgewandten Ende der Drehachse angeordnet ist. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein-oder Mehrkomponentenspritzverfahren. Insbesondere umfasst das Wälzelement zumindest ein Stützelement, welches stoffschlüssig mit der Drehachse verbunden ist. Das Stützelement weist in der Drehebene des Wälzelements ein kreisförmiges Profil auf. Vorzugsweise ist das Stützelement aus einem Duroplast und/oder einem Thermoplast gefertigt. Optional umfasst das Wälzelement eine Weichkomponente, welche das Stützelement in der Drehebene des Wälzelements vollständig, insbesondere ringförmig, umgibt. Insbesondere ist die Weichkomponente aus einem Elastomer gebildet. Ein Verhältnis einer maximale Erstreckung, insbesondere eines Außendurchmessers, des Stützelements in der Drehebene des Wälzelement zu einer maximalen Erstreckung, insbesondere einem Außendurchmesser, des Wälzelements beträgt zumindest 25 %, bevorzugt zumindest 50 %, besonders bevorzugt zumindest 75 %. Insbesondere ist das Wälzelement in dem Wälzabschnitt der Drehachse stoffschlüssig mit der Drehachse verbunden. Das Signalgeberelement ist vorzugsweise in dem Endabschnitt angeordnet. Insbesondere weist der Endabschnitt die Signalgeberaufnahme auf. Vorzugsweise ist die Signalgeberaufnahme auf einer Stirnseite der Drehachse angeordnet, insbesondere eingelassen, welche insbesondere zumindest im Wesentlichen senkrecht auf der Rotationsachse angeordnet ist. Vorzugsweise ist zwischen dem Endabschnitt und dem Wälzabschnitt der Drehachse der Lagerabschnitt der Drehachse angeordnet. Das Signalgeberelement ist mit dem Endabschnitt der Drehachse insbesondere dazu vorgesehen, innerhalb des Fahrgestells und/oder des Gehäuses angeordnet zu werden. Das Wälzelement ist mit dem Wälzabschnitt der Drehachse insbesondere dazu vorgesehen, außerhalb des Fahrgestells und/oder des Gehäuses angeordnet zu werden. Durch die Ausgestaltung können eine Montage und eine Demontage, insbesondere ein Austausch, der Signalgebereinheit und des Wälzelements vorteilhaft einfach gestaltet werden.

Des Weiteren wird vorgeschlagen, dass die Signalgebereinheit zumindest ein induktives weiteres Signalgeberelement umfasst, welches zu einer Anordnung an einem von dem Wälzelement separaten weiteren Wälzelement des Materialuntersuchungsgeräts vorgesehen ist. Vorzugsweise ist das weitere Signalgeberelement analog zu dem Signalgeberelement ausgebildet. Vorzugsweise ist das weitere Signalgeberelement an einer zu der Drehachse analogen weiteren Drehachse des weiteren Signalgeberelements analog zu dem Signalgeberelement angeordnet. Die Drehachse und die weitere Drehachse sind insbesondere beweglich relativ zu einander an dem Fahrgestell gelagert, insbesondere zu je einer unabhängigen Drehbewegung des Wälzelements und des weiteren Wälzelements fähig. Vorzugsweise weist die Sensoreinheit zumindest ein Sensorelement, welches dem Signalgeberelement zugeordnet ist, und ein weiteres Sensorelement, welches dem weitere Signalgeberelement zugeordnet ist, auf. Die Sensorelemente sind insbesondere jeweils zu einem induktiven Koppeln mit dem jeweils nächsten der Signalgeberelemente angeordnet. Optional weist die Sensoreinheit zumindest ein Abschirmelement auf, welches zu einer Abschwächung oder Vermeidung eines induktiven Koppelns des Signalgeberelements mit dem weiteren Sensorelement sowie eines induktiven Koppelns des weiteren Signalgeberelements mit dem Sensorelement vorgesehen ist. Alternativ weist die Sensoreinheit ein Sensorelement auf, welches dem Signalgeberelement und dem weiteren Signalgeberelement zugeordnet ist, wobei eine Recheneinheit der Positionsermittlungsvorrichtung dazu vorgesehen ist, ein gemeinsames Messsignal zu analysieren und insbesondere je einen Signalanteil des gemeinsamen Messsignals dem Wälzelement und dem weiteren Wälzelement zuzuordnen. Durch die Ausgestaltung können für die Positionsermittlung des Materialuntersuchungsgeräts vorteilhaft redundante Messsignale erfasst werden. Insbesondere kann eine vorteilhaft zuverlässige und/oder vorteilhaft präzise Ermittlung der Position des Materialuntersuchungsgeräts erreicht werden.

Darüber hinaus wird vorgeschlagen, dass die Positionsermittlungsvorrichtung zumindest eine, insbesondere die bereits genannte, Recheneinheit zu einem Vergleich des Messsignals von dem Signalgeberelement mit einem weiteren Messsignal von dem weiteren Signalgeberelement umfasst. Unter einer "Recheneinheit" soll insbesondere eine Einheit mit einem Informationseingang, einer Informationsverarbeitung und einer Informationsausgabe verstanden werden. Vorteilhaft weist die Recheneinheit zumindest einen Prozessor, einen Speicher, Ein- und Ausgabemittel, weitere elektrische Bauteile, ein Betriebsprogramm, Regelroutinen, Steuerroutinen und/oder Berechnungsroutinen auf. Vorzugsweise sind die Bauteile der Recheneinheit auf einer gemeinsamen Platine angeordnet und/oder vorteilhaft in einem gemeinsamen Gehäuse angeordnet. Alternativ oder zusätzlich umfasst die Recheneinheit eine analoge Comparatorschaltung zu einem Vergleich der Messsignale. Beispielsweise hängt eine Amplitude des Messsignals von einer Drehposition des Signalgeberelements ab. Insbesondere ist das Messsignal bei einer gleichförmigen Bewegung des Wälzelements sinusförmig. Insbesondere ist die Recheneinheit dazu vorgesehen, aus dem Messsignal die Drehposition, insbesondere eine Winkeldifferenz zur letzten bekannten Drehposition, zu ermitteln. Insbesondere ist die Recheneinheit dazu vorgesehen, dasjenige der Messsignale zu identifizieren, welches die größere oder welches die kleinere Winkeldifferenz zur letzten bekannten Drehposition aufweist. Die Recheneinheit ist insbesondere dazu vorgesehen, dasjenige der Messsignale zu identifizieren, welches einer größeren von den Wälzelementen abgewälzten Strecke entspricht, und/oder dasjenige der Messsignale zu identifizieren, welches einer kleineren von den Wälzelementen abgewälzten Strecke entspricht. Durch die Ausgestaltung kann vorteilhaft ein abweichendes Verhalten eines der Wälzelemente vorteilhaft erfasst werden. Beispielsweise kann ein Gleiten eines der Wälzelemente über die Oberfläche des Untersuchungsobjekts und/oder ein Kontaktverlust eines der Wälzelemente mit der Oberfläche vorteilhaft erkannt werden.

Ferner wird vorgeschlagen, dass die Positionsermittlungsvorrichtung zumindest ein Gleitlager zu einer reversiblen Lagerung der Signalgebereinheit an dem Fahrgestell umfasst. Insbesondere ist das Gleitlager zu einer Aufnahme der Drehachse, insbesondere des Lagerabschnitts der Drehachse, vorgesehen, wobei das Gleitlager in einem an der Drehachse angeordnetem Zustand relativ zu der Drehachse drehbar ist. Das Gleitlager ist insbesondere zu einer drehfesten Anordnung an dem Fahrgestell vorgesehen. Das Gleitlager umfasst zumindest ein Schleifelement, welches in einem an dem Fahrgestell montierten Zustand des Gleitlagers in einen Drehlageraufnahmebereich des Gleitlagers hineinragt. Insbesondere ist das Schleifelement zu einem direkten Kontakt mit der Drehachse vorgesehen. Besonders bevorzugt ist das Schleifelement als Teil einer den Drehlageraufnahmebereich begrenzenden Wandung des Gleitlagers ausgebildet, wobei das Schleifelement relativ zu der übrigen Wandung beweglich, insbesondere schwenkbar, ausgebildet ist. Das Schleifelement weist vorzugsweise eine Übermaßpassung bezüglich einer Lageraufnahme des Fahrgestells auf, sodass das Schleifelement bei einer Anordnung in dem Fahrgestell in den Drehlageraufnahmebereich hineingedrückt wird. Insbesondere ist das Schleifelement dazu vorgesehen, eine Drehbewegung der Drehachse mittels Reibung zu dämpfen, insbesondere ein Nachlaufen der Drehachse, bei einem Kontaktverlust des Wälzelements mit der Oberfläche des Untersuchungsobjekts, mittels Reibung zu bremsen. Unter einer "reversiblen Lagerung" soll insbesondere eine Lagerung verstanden werden, die zumindest im Wesentlichen ohne Beschädigung und/oder plastische Verformung montierbar und zumindest im Wesentlichen ohne Beschädigung und/oder plastische Verformung lösbar ist. Unter "im Wesentlichen ohne Beschädigung lösbar verbunden" soll in diesem Zusammenhang insbesondere eine von einem Verschleiß, insbesondere Materialabrieb, abgesehen lösbare Verbindung zwischen zwei Bauteilen verstanden werden. Insbesondere ist das Gleitlager zumindest 3mal, bevorzugt zumindest 10mal, besonders bevorzugt zumindest 50mal, an/von der Drehachse und/oder dem Fahrgestell montierbar und demontierbar, insbesondere unter Beibehaltung seiner Funktionstüchtigkeit und insbesondere, bevor ein Materialversagen des Gleitlagers eintritt. Vorzugsweise ist das Gleitlager von einer Außenseite des Gehäuses, insbesondere auch bei geschlossenem Gehäuse, an/von dem Fahrgestell montierbar und demontierbar. Vorzugsweise umfasst das Gleitlager zumindest ein Axialrastelement, insbesondere eine Rastzunge, zu einem Einrasten in eine Verjüngung der Drehachse. Die Verjüngung zu einem Einrasten des Gleitlagers ist in einer Ebene senkrecht zur Rotationsachse zwischen dem Lagerabschnitt und der Signalgeberaufnahme angeordnet. Vorzugsweise umfasst das Gleitlager einen Drehverschluss, insbesondere einen Bajonettverschluss, mit welchem es an einer Außenseite des Fahrgestells fixierbar ist. Das Gleitlager ist besonders bevorzugt als Einzelteil ausgebildet. Vorzugsweise ist das Gleitlager aus einem einzelnen Rohling, einer Masse und/oder einem Guss, besonders bevorzugt in einem Spritzgussverfahren, insbesondere einem Ein- und/oder Mehrkomponenten-Spritzgussverfahren, hergestellt. Das Gleitlager ist vorzugsweise aus Kunststoff, insbesondere einem Verbundwerkstoff, besonders bevorzugt basierend auf Polytetrafluorethylen (PTFE), gefertigt. Durch die Ausgestaltung kann die Signalgebereinheit vorteilhaft einfach an/von dem Fahrgestell montiert und demontiert werden, insbesondere ohne das Gehäuse zu öffnen. Ferner kann eine Gleitreibung der Drehachse in der Lagerbuchse vorteilhaft eingestellt werden. Insbesondere kann eine Dämpfung einer Drehbewegung der Drehachse und des Wälzelements in einem vorteilhaft engen Toleranzfeld erreicht werden. Insbesondere kann ein Freilaufen der Drehachse und des Wälzelements bei einem Verlust eines Kontakts des Wälzelements mit einer Oberfläche des Untersuchungsobjekts vorteilhaft schnell beendet werden. Ferner kann ein Risiko eines Gleitens des Wälzelements über die Oberfläche des Untersuchungsobjekts vorteilhaft gering gehalten werden. Insbesondere kann dadurch eine Fehlerspanne der Positionserfassungsvorrichtung vorteilhaft klein gehalten werden.

Des Weiteren wird ein handhaltbares Materialuntersuchungsgerät mit zumindest einer erfindungsgemäßen Positionsermittlungsvorrichtung mit zumindest einem Fahrgestell und mit zumindest einem am Fahrgestell gelagerten Wälzelement vorgeschlagen. Das Materialuntersuchungsgerät umfasst vorzugsweise die Ortungssensoreinheit, insbesondere die Antenneneinheit, welche zumindest ein Sendeelement zu einem Aussenden von elektromagnetischen Wellen, insbesondere im Mikrowellenbereich und/oder im Radiowellenbereich, und zumindest ein Empfangselement zu einem Empfangen von elektromagnetischen Wellen, insbesondere im Mikrowellenbereich und/oder im Radiowellenbereich, umfasst. Optional sind das Sendeelement und das Empfangselement durch dasselbe Bauteil, insbesondere durch dasselbe Antennenelement, gebildet. Die Ortungssensoreinheit umfasst vorzugsweise eine Sende- und Empfangselektronik mit beispielsweise einem Signalgenerator, einem Verstärker, analogen und/oder digitalen Signalfiltern o. dgl. Das Materialuntersuchungsgerät umfasst vorzugsweise das Gehäuse, welches die Ortungssensoreinheit aufnimmt und/oder an welchem die Ortungssensoreinheit angeordnet ist. Unter "handhaltbar" soll insbesondere ohne Zuhilfenahme einer Haltevorrichtung und/oder Transportvorrichtung mit einer Hand haltbar und/oder transportierbar verstanden werden. Insbesondere weist das Materialuntersuchungsgerät eine Masse von weniger als 20 kg, bevorzugt weniger als 10 kg, besonders bevorzugt von weniger als 5 kg, auf. Optional weist das Materialuntersuchungsgerät einen vom Gehäuse abstehenden Griff, in das Gehäuse eingelassene Griffmulden und/oder an dem Gehäuse angeordnete Griffflächen zu einer Führung des Materialuntersuchungsgeräts durch einen Benutzer auf. Das Fahrgestell ist vorzugsweise als Teil des Gehäuses ausgebildet. Vorzugsweise umfasst das Materialuntersuchungsgerät zumindest das Wälzelement, bevorzugt zumindest zwei, insbesondere vier Wälzelemente, welche/s an dem Fahrgestell gelagert sind/ist. Das Materialuntersuchungsgerät umfasst vorzugsweise eine Anzeigeeinheit, insbesondere ein Display und/oder zumindest eine Kontrollleuchte, welche an dem Gehäuse, insbesondere an einer von den Wälzelement abgewandten Seite des Gehäuses, angeordnet, insbesondere darin eingelassen, ist. Insbesondere ist die Anzeigeeinheit zu einer Ausgabe eines Ergebnisses einer mit der Ortungssensoreinheit durchgeführten Messung vorgesehen. Das Materialuntersuchungsgerät umfasst vorzugsweise eine Speichereinheit. Die Speichereinheit ist vorzugsweise als wiederbeschreibbarer Speicher, wie beispielsweise als Festwertspeicher (ROM), als Electrically Erasable Programmable Read-Only Memory (EEPROM), als Flash-Speicher (Flash-EEPROM) o. dgl., ausgebildet. Alternativ oder zusätzlich umfasst das Materialuntersuchungsgerät eine Schnittstelle zu einer leitungsgebundenen Kommunikation, beispielsweise einen USB-Anschluss, einen Lightning-Anschluss, einen R-232-Anschluss, einen Ethernet-Anschluss und/oder zu einer drahtlosen, insbesondere funkwellengebundenen, Kommunikation beispielsweise ein Wi-Fi-Modul, ein Bluetooth-Modul, ein ZigBee-Modul o. dgl., mit einem externen Gerät, insbesondere zu einer externen Auswertung und/oder Aufbereitung der mit der Ortungssensoreinheit durchgeführten Messung. Das Materialuntersuchungsgerät umfasst zumindest ein Bedienelement, insbesondere mehrere Bedienelemente, wie beispielsweise einen Knopf, einen Schalter, einen Schiebetaster, einen Drehregler o. dgl., zu einer Benutzereingabe. Alternativ oder zusätzlich ist das Display der Anzeigeeinheit als Touchscreen ausgebildet. Insbesondere umfasst das Materialuntersuchungsgerät die Recheneinheit zu einer Auswertung einer Messung der Ortungssensoreinheit und/oder der Positionserfassungsvorrichtung. Vorzugsweise sind/ist die Recheneinheit, die Speichereinheit, die Schnittstelle, die Sensoreinheit und/oder die Signalgeberelemente innerhalb des Gehäuses angeordnet. Durch die erfindungsgemäße Ausgestaltung kann ein Materialuntersuchungsgerät bereitgestellt werden, das seine Position vorteilhaft unempfindlich gegenüber einer Verschmutzung und/oder einer Umgebungshelligkeit ermitteln kann.

Weiter geht die Erfindung aus von einem Verfahren zum Betrieb einer, insbesondere erfindungsgemäßen Positionsermittlungsvorrichtung für ein, insbesondere erfindungsgemäßes, handhaltbares Materialuntersuchungsgerät, wobei in zumindest einem Verfahrensschritt ein Messsignal von einem Signalgeberelement des Materialuntersuchungsgeräts in Abhängigkeit von einer Drehposition eines Wälzelements des Materialuntersuchungsgeräts geändert wird, in zumindest einem Drehermittlungsschritt das Messsignal von einer Sensoreinheit des Materialuntersuchungsgeräts erfasst wird und in zumindest einem Positionsermittlungsschritt ein durch das Materialuntersuchungsgerät zurückgelegter Weg ermittelt wird.

Es wird vorgeschlagen, dass das Signalgeberelement und die Sensoreinheit in zumindest einem Verfahrensschritt induktiv koppeln, um das Messsignal zu erzeugen. Insbesondere wälzt das Wälzelement bei einer Bewegung des Materialuntersuchungsgeräts entlang der Oberfläche des Untersuchungsgeräts auf der Oberfläche ab und dreht die Drehachse um die Rotationsachse. Über die Drehachse vermittelt dreht sich das Signalgeberelement vorzugsweise bei einem Abwälzen des Wälzelements. Das Signalgeberelement sendet insbesondere ein Magnetfeld aus, dessen Richtung abhängig von einer aktuellen Drehposition des Signalgeberelements um die Rotationachse ist. Die Sensoreinheit erfasst insbesondere das Magnetfeld des Signalgeberelements und erzeugt ein von der Drehposition des Signalgeberelements abhängiges Messsignal. Die Recheneinheit bestimmt in dem Drehermittlungsschritt eine aktuelle Drehposition des Wälzelements anhand des Messsignals. Vorzugsweise hinterlegt die Recheneinheit die aktuelle Drehposition und/oder den aktuellen Wert des Messsignals in ihrem Speicher und/oder in der Speichereinheit. Vorzugsweise vergleicht die Recheneinheit die aktuelle Drehposition mit der zuletzt abgespeicherten Drehposition des Wälzelements, um eine von dem Wälzelement zurückgelegte Winkeldifferenz seit der letzten Messung zu ermitteln. Vorzugsweise ist in der Recheneinheit eine Bemaßung, insbesondere ein Radius, ein Außendurchmesser und/oder ein Wälzumfang, des Wälzelements hinterlegt. Die Recheneinheit ermittelt in dem Positionsermittlungsschritt abhängig von der Bemaßung des Wälzelements und der Winkeldifferenz eine durch das Wälzelement abgewälzte Strecke, insbesondere als von dem Materialuntersuchungsgerät zurückgelegte Strecke. Durch die Ausgestaltung kann eine vorteilhaft zuverlässige Positionsermittlung für ein Materialuntersuchungsgerät erreicht werden. Insbesondere ist die Positionsermittlung vorteilhaft unempfindlich gegenüber einer Verschmutzung und/oder einer Umgebungshelligkeit.

Weiterhin wird vorgeschlagen, dass der Positionsermittlungsschritt ausgelöst wird, wenn in dem Drehermittlungsschritt eine Mindestdrehbewegung des Wälzelements ermittelt wird. Insbesondere wird der Positionsermittlungsschritt nur dann ausgelöst, wenn in dem Drehermittlungsschritt eine Mindestdrehbewegung des Wälzelements ermittelt wird. Die Mindestdrehbewegung ist insbesondere eine minimale Winkeldifferenz zwischen der aktuellen Drehposition und der zuletzt gespeicherten Drehposition. Vorzugsweise ist ein Wert der Mindestdrehbewegung in der Recheneinheit als Schwellenwert hinterlegt. Der Wert der Mindestdrehbewegung wird, insbesondere werkseitig, in Abhängigkeit von einer Auslegung des Schleifelements bestimmt. Optional ist der Wert der Mindestdrehbewegung von einem Benutzer mittels eines der Bedienelemente des Materialuntersuchungsgeräts einstellbar. Vorzugsweise ist der Wert der Mindestdrehbewegung umso höher, je geringer ein Reibungskoeffizient zwischen dem Schleifelement und der Drehachse ausfällt. Vorzugsweise ist der Wert der Mindestdrehbewegung umso kleiner, je höher ein Reibungskoeffizient zwischen dem Schleifelement und der Drehachse ausfällt. Durch die Ausgestaltung kann ein Risiko einer Fehlbestimmung der Position des Materialuntersuchungsgeräts vorteilhaft klein gehalten werden. Insbesondere kann ein Anteil an der Winkeldifferenz, welche einem, insbesondere durch das Gleitlager begrenzten, Nachlaufen des Wälzelements entspricht, nachdem dieses den Kontakt mit der Oberfläche des Untersuchungsobjekts verloren hat, vorteilhaft klein gehalten werden.

Erfindungsgemäß umfasst das Verfahren einen Vergleichsschritt, bei welchem ein kleinster Wert von mehreren ermittelten Drehbewegungen unterschiedlicher Wälzelemente des Materialuntersuchungsgeräts verworfen wird. Insbesondere weist die Drehbewegung mit dem kleinsten Wert die kleinste Winkeldifferenz auf. Insbesondere wertet die Recheneinheit in dem Positionsermittlungsschritt nur die größte Winkeldifferenz eines der Wälzelemente zu einer Ermittlung der durch das Materialuntersuchungsgerät zurückgelegten Strecke aus. Alternativ, insbesondere wenn Messsignale von zumindest drei separaten Wälzelementen vorliegen, wertet die Recheneinheit optional mehrere Winkeldifferenzen, welche größer sind als die kleinste Winkeldifferenz, gemeinsam aus, um die von dem Materialuntersuchungsgerät zurückgelegte Strecke zu ermitteln. Bei einer gemeinsamen Auswertung mehrerer Winkeldifferenzen ermittelt die Recheneinheit vorzugsweise einen Mittelwert der gemeinsam auszuwertenden Winkeldifferenzen und wertet den Mittelwert aus, um die von dem Materialuntersuchungsgerät zurückgelegte Strecke zu ermitteln. Durch die Ausgestaltung kann ein Risiko einer Fehlbestimmung der Position des Materialuntersuchungsgeräts vorteilhaft klein gehalten werden. Insbesondere kann ein Fehler der Positionsermittlung aufgrund eines Gleitens eines der Wälzelemente und/oder aufgrund einer von der Oberfläche beabstandeten Anordnung eines der Wälzelemente vorteilhaft klein gehalten werden.

Darüber hinaus wird vorgeschlagen, dass das Verfahren einen dem Drehermittlungsschritt nachgelagerten Aktualisierungsschritt umfasst, in welchem die aktuelle Drehposition des Wälzelements des Materialuntersuchungsgeräts als Winkelreferenz für einen nächsten Drehermittlungsschritt gespeichert wird. Vorzugsweise speichert die Recheneinheit die aktuell erfasste Drehposition in ihrem Speicher oder der Speichereinheit. Vorzugsweise hinterlegt die Recheneinheit die aktuelle Drehposition mehrfach pro Umdrehung des Wälzelements. Ein Überschreiten des Werts der Mindestdrehbewegung löst vorzugsweise den Aktualisierungsschritt aus. Alternativ oder zusätzlich löst ein Zeitgeber der Recheneinheit den Aktualisierungsschritt in regelmäßigen Abständen aus. Vorzugsweise speichert die Recheneinheit zu Beginn einer Messung und/oder ausgelöst durch eine Bewegung der Wälzelemente die aktuelle Drehposition als Nullreferenz, wobei insbesondere eine nachfolgende Drehposition relativ zu der Nullreferenz ermittelt wird. Durch die Ausgestaltung kann die von dem Wälzelement zurückgelegte Winkeldifferenz vorteilhaft zuverlässig erfasst werden. Insbesondere kann ein Fehler aufgrund eines Vergleichs mit einer absoluten Ausrichtungsreferenz vermieden werden.

Die erfindungsgemäße Positionsermittlungsvorrichtung für ein handhaltbares Materialuntersuchungsgerät, das erfindungsgemäße Verfahren zum Betrieb der Positionsermittlungsvorrichtung und das erfindungsgemäße Materialuntersuchungsgerät mit einer Positionsermittlungsvorrichtung sollen/soll hierbei nicht auf die oben beschriebene Anwendung und Ausführungsform beschränkt sein. Insbesondere können/kann die erfindungsgemäße Positionsermittlungsvorrichtung für ein handhaltbares Materialuntersuchungsgerät, das erfindungsgemäße Verfahren zum Betrieb der Positionsermittlungsvorrichtung und das erfindungsgemäße Materialuntersuchungsgerät mit einer Positionsermittlungsvorrichtung zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines erfindungsgemäßen Materialuntersuchungsgeräts,
- Fig. 2: eine schematische Darstellung einer erfindungsgemäßen Positionsermittlungsvorrichtung,
- Fig. 3: eine schematische Explosionsdarstellung mit einem Fahrgestell, einem Gleitlager und einem Wälzelement des erfindungsgemäßen Materialuntersuchungsgerät und
- Fig. 4: ein schematisches Flussdiagramm eines erfindungsgemäßen Verfahrens.

### Beschreibung des Ausführungsbeispiels

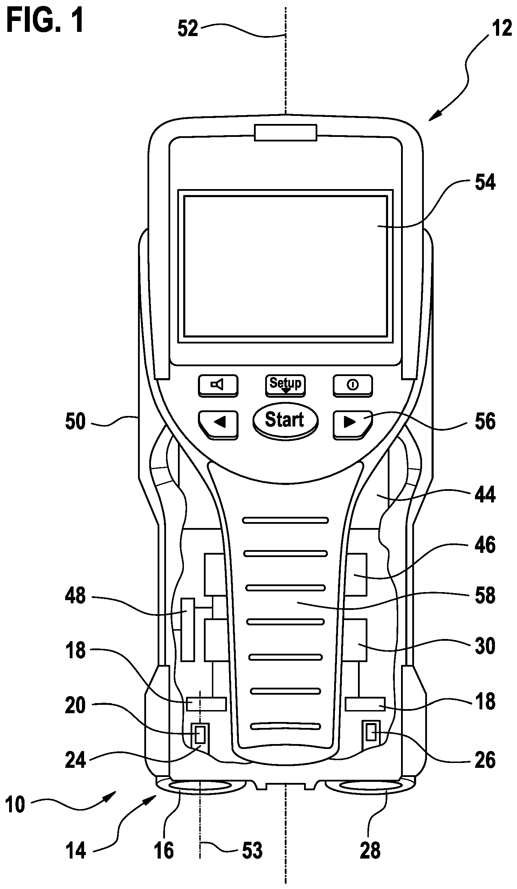

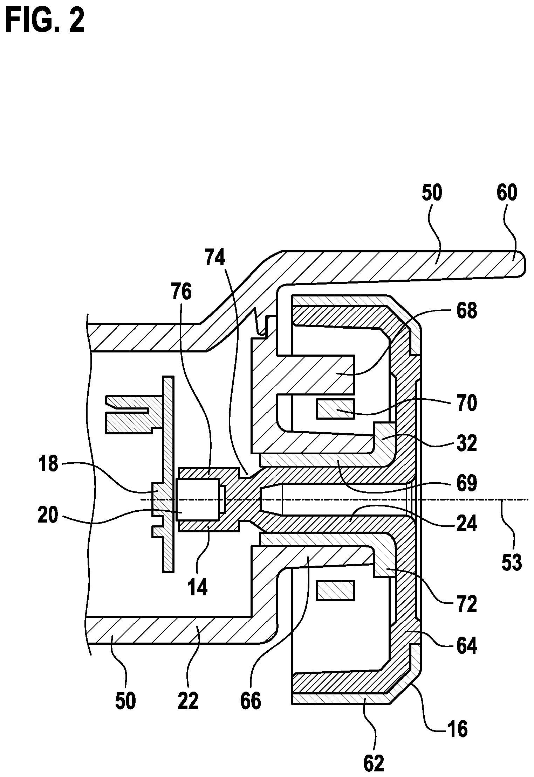

Figur 1 zeigt ein handhaltbares Materialuntersuchungsgerät 12. Das Materialuntersuchungsgerät 12 ist insbesondere zu einer Ortung von Fremdobjekten und/oder Einlagerungen, insbesondere Wasser, in einem Untersuchungsobjekts, insbesondere einer Wand, einem Boden, einer Decke o. dgl., ausgebildet. Das Materialuntersuchungsgerät 12 kann beispielsweise als Ortungsgerät und/oder als Feuchtigkeitsmesser ausgebildet sein. Das Materialuntersuchungsgerät 12 umfasst ein Gehäuse 50. Das Materialuntersuchungsgerät 12 umfasst eine Ortungssensoreinheit 44 zu einem Aussenden und Empfangen von elektromagnetischen Wellen, insbesondere Mikrowellen und/oder Radiowellen. Die Ortungssensoreinheit 44 ist in dem Gehäuse 50 und/oder an einer Auflageseite des Gehäuses 50 angeordnet. Die Auflageseite des Gehäuses 50 ist insbesondere dazu vorgesehen, bei einer Messung mit dem Materialuntersuchungsgerät 12 einer Oberfläche des Untersuchungsobjekts zugewandt ausgerichtet zu werden. Das Materialuntersuchungsgerät 12 umfasst vorzugsweise einen, insbesondere vom Gehäuse 50 abstehenden Griff 58, zu einer manuellen Führung des Materialuntersuchungsgeräts 12 entlang der Oberfläche des Untersuchungsobjekts. Alternativ umfasst das Materialuntersuchungsgerät 12 Griffmulden oder Griffflächen, die an dem Gehäuse 50 angeordnet sind. Das Materialuntersuchungsgerät 12 umfasst zumindest ein Wälzelement 16. Das Materialuntersuchungsgerät 12 umfasst zumindest ein weiteres Wälzelement 28, welches separat von dem Wälzelement 16 ausgebildet ist, insbesondere beabstandet von dem Wälzelement 16 an dem Fahrgestell 22 gelagert ist. Bevorzugt umfasst das Materialuntersuchungsgerät 12 mehrere, insbesondere drei oder vier, Wälzelemente. Vorzugsweise ist das Wälzelement 16zu einer eigenständigen, insbesondere von dem weiteren Wälzelement 28 unabhängigen, Drehbewegung gelagert. Die Wälzelemente 16, 28 sind an einem Fahrgestell 22 (vgl. Figur 2) des Materialuntersuchungsgeräts 12 gelagert. Insbesondere sind die Wälzelemente 16, 28 zu einem direkten Kontakt mit der Oberfläche und zu einer beabstandeten Anordnung der Auflageseite des Gehäuses 50, insbesondere der Ortungssensoreinheit 44, von der Oberfläche des Untersuchungsobjekts vorgesehen. Insbesondere ist das Fahrgestell 22 auf der Auflageseite des Gehäuses 50 angeordnet. Vorzugweise ist das Fahrgestell 22 als Teil des Gehäuses 50 ausgebildet. Alternativ ist das Gehäuse 50 an dem, beispielsweise als Rahmen oder Bodenplatte ausgebildeten, Fahrgestell 22 befestigt, insbesondere eingerastet und/oder verschraubt. Das Fahrgestell 22 kann insbesondere in das Gehäuse 50 eingelassen sein oder das Gehäuse 50 auf das Fahrgestell 22 aufgesetzt sein. Vorzugsweise weist das Materialuntersuchungsgerät 12 eine Längsachse 52 auf. Insbesondere erstreckt sich eine Drehebene zumindest eines der Wälzelemente 16, 28 zumindest im Wesentlichen senkrecht zu der Längsachse 52. Alternativ ist die Drehebene zumindest eines der Wälzelemente 16, 28 zumindest im Wesentlichen parallel zu der Längsachse 52 angeordnet oder zusätzlich derart ausrichtbar. Das Materialuntersuchungsgerät 12 umfasste eine Positionsermittlungsvorrichtung 10. Die Positionsermittlungsvorrichtung 10 ist zu einer Erfassung eines durch das Materialuntersuchungsgerät 12 zurückgelegten Wegs eingerichtet. Die Positionsermittlungsvorrichtung 10 umfasst zumindest eine Signalgebereinheit 14 zu einer Anordnung an einem der Wälzelement 16 des Materialuntersuchungsgeräts 12. Die Positionsermittlungsvorrichtung 10 umfasst zumindest eine Sensoreinheit 18.

Die Signalgebereinheit 14 umfasst zumindest ein Signalgeberelement 20. Das Signalgeberelement 20 ist zu einer Änderung eines Messsignals in Abhängigkeit von einer Drehposition des Wälzelements 16 ausgebildet. Die Sensoreinheit 18 ist zu einer Anordnung an dem Fahrgestell 22 des Materialuntersuchungsgeräts 12 vorgesehen. Die Sensoreinheit 18 ist zu einer Erfassung des Messsignals eingerichtet. Das Signalgeberelement 20 ist als induktives Signalgeberelement, insbesondere als Permanentmagnet, ausgebildet. Die Sensoreinheit 18 ist als induktive Sensoreinheit, insbesondere als Magnetfeldmesser, ausgebildet. Die Sensoreinheit 18 und das Signalgeberelement 20 sind zu einer induktiven Kopplung miteinander eingerichtet. Die Signalgebereinheit 14 umfasst eine eine gedachte Rotationsachse 53 des Wälzelements 16 vorgebende, insbesondere physische, Drehachse 24. Das Signalgeberelement 20 ist an der Drehachse 24 angeordnet. Das Signalgeberelement 20 ist in die Drehachse 24 in radialer Richtung der Drehachse 24 maximal im Wesentlichen bündig integriert. Die Signalgebereinheit 14 weist zumindest ein induktives weiteres Signalgeberelement 26 auf, welches zu einer Anordnung an dem von dem Wälzelement 16 separaten weiteren Wälzelement 28 des Materialuntersuchungsgeräts 12 angeordnet ist.

Die Positionsermittlungsvorrichtung 10 umfasst eine Recheneinheit 30. Die Recheneinheit 30 ist vorzugsweise zu einer Auswertung von mittels der Ortungssensoreinheit 44 und/oder der Positionsermittlungsvorrichtung 10 ermittelten Messdaten eingerichtet. Die Recheneinheit 30 ist zu einem Vergleich des Messsignals von dem Signalgeberelement 20 mit einem weiteren Messsignal von dem weiteren Signalgeberelement 26 eingerichtet. Das Materialuntersuchungsgerät 12 umfasst optional eine Speichereinheit 46 zu einem Speichern der mittels der Ortungssensoreinheit 44 und/oder der Positionsermittlungsvorrichtung 10 ermittelten Messdaten. Das Materialuntersuchungsgerät 12 umfasst eine Anzeigeeinheit 54, insbesondere ein Display, zu einer Darstellung der Messdaten der Ortungssensoreinheit 44 und/oder der Positionsermittlungsvorrichtung 10. Die Anzeigeeinheit 54 ist auf einer der Auflageseite abgewandten Seite des Gehäuses 50 angeordnet. Das Materialuntersuchungsgerät 12 umfasst zumindest ein Bedienelement 56. Optional umfasst das Materialuntersuchungsgerät 12 eine Schnittstelle 48 zu einer leitungsgebundenen, speichermediumgebundenen und/oder drahtlosen, insbesondere funkwellengebundenen, Kommunikation mit einem externen Gerät, insbesondere zu einer Übermittlung der mittels der Ortungssensoreinheit 44 und/oder der Positionsermittlungsvorrichtung 10 ermittelten Messdaten.

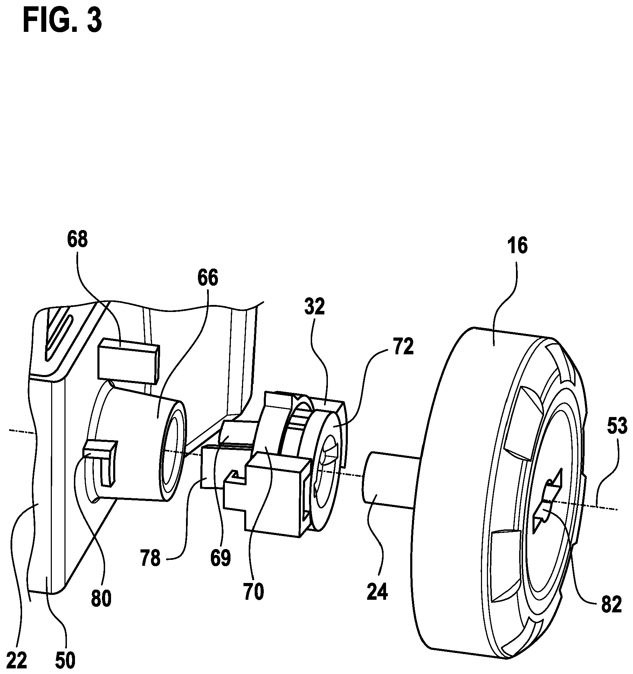

Figuren 2 und 3 zeigen eine Lagerung des Wälzelements 16 an dem Fahrgestell 22. Insbesondere zeigt Figur 2 eine schematische Schnittdarstellung der Lagerung in dem an dem Fahrgestell 22 montierten Zustand der der Positionsermittlungsvorrichtung 10 in einer zu der Längsachse 52 parallelen, und insbesondere zu der Auflageseite senkrechten, Schnittebene. Insbesondere zeigt Figur 3 eine perspektivische Explosionsdarstellung der Lagerung Das Fahrgestell 22 ist als Bodenschale des Gehäuses 50 ausgebildet. Insbesondere umfasst das Gehäuse 50 zumindest ein Gehäuseelement 60, welche insbesondere unterschiedlich von dem Fahrgestell 22 ausgebildet ist. Insbesondere bildet das Gehäuseelement 60 zusammen mit dem Fahrgestell 22 einen Innenraum, in welchem die Positionsermittlungsvorrichtung 10 zumindest teilweise angeordnet ist. Insbesondere ist Sensoreinheit 18 und das Signalgeberelement 20 in dem Innenraum angeordnet. Die Drehachse 24 ist als Achsstumpf ausgebildet. Insbesondere weist die Drehachse 24 eine Wälzelementende auf, an welchem das Wälzelement 16 und optional zusätzliche Wälzelemente angeordnet sind. Die Drehachse 24 ist einstückig mit dem Wälzelement 16 ausgebildet. Das Wälzelement 16 weist zumindest ein Stützelement 64 aus einem plastischen Material, insbesondere einem Duroplast oder einem Thermoplast auf. Optional weist das Wälzelement 16 eine Weichkomponente 62 aus einem elastischen Material, insbesondere einem Elastomer, auf. Insbesondere umschließt die Weichkomponente 62 das Stützelement 64 in der Drehebene des Wälzelement 16. Insbesondere ist die Drehachse 24 einstückig mit dem Stützelement 64 ausgebildet. Insbesondere weist die Drehachse 24 ein Endabschnitt auf, welches ein von dem Wälzelementende abgewandtes Ende der Drehachse 24 bildet. Insbesondere ist der Endabschnitt frei von Wälzelementen. Vorzugsweise weist der Endabschnitt eine Signalgeberaufnahme 76 auf, in welcher das Signalgeberelement 20 angeordnet ist. Die Signalgerberaufnahme 76 ist insbesondere als eine Vertiefung in einer Stirnseite der Drehachse 24 ausgebildet, wobei die Stirnseite zumindest im Wesentlichen senkrecht zu der Rotationsachse 53 angeordnet ist.

Die Positionsermittlungsvorrichtung 10 umfasst zumindest ein Gleitlager 32 zu einer reversiblen Lagerung der Signalgebereinheit 14 an dem Fahrgestell 22.

Das Gleitlager 32 ist entlang der Drehachse 14 zwischen der Signalgeberaufnahme 76 und dem Wälzelement 16 angeordnet. Das Gleitlager 32 weist insbesondere einen bajonettartigen Drehverschluss 70 auf (vgl. Fig. 3). Der Drehverschluss 70 ist mittels eines Formschlusses mit einer Drehverschlussaufnahme 80 und einem Anschlagselement 68 des Fahrgestells 22 zu einer Fixierung des Gleitlagers 32 an dem Fahrgestell 22, insbesondere an einem röhrenförmigen Strukturelement 66 des Fahrgestells 22, vorgesehen. Das Wälzelement 16 umfasst vorzugsweise ein Abtriebdurchlass 82 zu einem Durchlass einer externen Abtriebsvorrichtung, insbesondere eines Schraubendrehers auf, zu einem Betätigen der Drehverschlusses 70 auf. Vorzugsweise weist die Drehachse 24 eine Verjüngung 74 auf, in welcher ein Axialrastelement 78 des Gleitlagers 32 zu einem axialen Formschluss eingreift. Die Drehachse 24 ist in einem mit dem Gleitlagere 32 an dem Fahrgestell 22 montierten Zustand relativ zu dem Gleitlager 32 und dem Fahrgestell 22 drehbar. Insbesondere umfasst das Gleitlager 32 einen Zentralhülse 69 zu einer Aufnahme der Drehachse 24. Vorzugsweise ist die Zentralhülse 69 und der Drehverschluss 70 konzentrisch angeordnet.

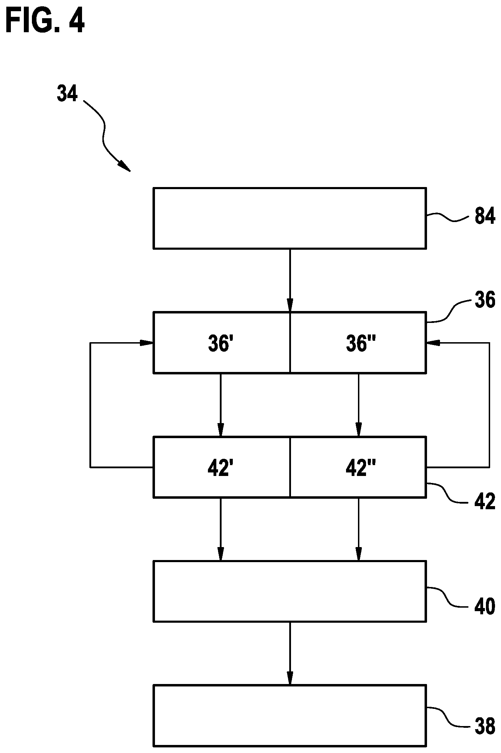

Figur 4 zeigt ein Flussdiagramm eines Verfahrens 34 zum Betrieb der Positionsermittlungsvorrichtung 10 des handhaltbaren Materialuntersuchungsgeräts 12 Das Verfahren 34 umfasst einen Messschritt 84. Das Verfahren 34 umfasst einen Drehermittlungsschritt 36. Das Verfahren 34 umfasst einen Aktualisierungsschritt 42. Das Verfahren 34umfasst einen Vergleichsschritt 40. Das Verfahren 34 umfasst einen Positionsermittlungsschritt 38.

In dem Messschritt 84 wird das Materialuntersuchungsgerät 12 insbesondere von einem Benutzer, entlang der Oberfläche des Untersuchungsobjekts verfahren. Alternativ bewegt sich das Materialuntersuchungsgerät 12 mittels eines Motors selbsttätig. In dem Messschritt 84 wälzt sich zumindest eines der Wälzelemente 16, 28 auf der Oberfläche ab. In dem Messschritt koppelt zumindest eines der Signalgeberelemente 20, 26 und die Sensoreinheit 18 induktiv, um das Messsignal zu erzeugen. In dem Messschritt 84 wird das Messsignal von zumindest einem der Signalgeberelement 20, 26 des Materialuntersuchungsgeräts 12 in Abhängigkeit von einer Drehposition eines der Wälzelements 16, 28 des Materialuntersuchungsgeräts 12 geändert. Durch ein Abwälzen der Wälzelemente 16, 28 wird der Drehermittlungsschritt 36 ausgelöst. In dem Drehermittlungsschritt 36 wird das Messsignal von der Sensoreinheit 18 des Materialuntersuchungsgeräts 12 erfasst. Insbesondere wird in einer Drehermittlungsphase 36' des Drehermittlungsschritts 36 das von dem Signalgeberelement 20 veränderte Messsignal erfasst. Insbesondere wird in der Drehermittlungsphase 36' des Drehermittlungsschritts 36 eine aktuelle Drehposition des Wälzelement 16 von der Recheneinheit 30 ermittelt. Insbesondere wird in einer weiteren Drehermittlungsphase 36" des Drehermittlungsschritts 36 das von dem weiteren Signalgeberelement 26 veränderte Messsignal erfasst. Insbesondere wird in der weiteren Drehermittlungsphase 36" des Drehermittlungsschritts 36 eine aktuelle Drehposition des weiteren Wälzelement 28 von der Recheneinheit 30 ermittelt. In dem dem Drehermittlungsschritt 36 nachgelagerten Aktualisierungsschritt 32 werden die aktuelle Drehpositionen der Wälzelemente 16, 28 des Materialuntersuchungsgeräts 12 als Winkelreferenz für einen nächsten Drehermittlungsschritt 36 gespeichert. Insbesondere werden in dem Drehermittlungsschritt 36 die Drehpositionen relativ zu einer zuvor erfassten und/oder in der Speichereinheit 46 hinterlegten Winkelreferenz ermittelt. In einer Aktualisierungsphase 42' des Aktualisierungsschritts 42 wird die aktuelle Drehposition des Wälzelements 16 in der Speichereinheit 46 gespeichert. In einer weitere Aktualisierungsphase 42' des Aktualisierungsschritts 42 wird die aktuelle Drehposition des Wälzelements 16 in der Speichereinheit 46 gespeichert.

In dem Vergleichsschritt 40 wird ein kleinster Wert von mehreren der ermittelten Drehbewegungen der unterschiedlichen Wälzelemente 16, 28 des Materialuntersuchungsgeräts 12 verworfen. Insbesondere wird ein größter ermittelter Wert der Drehbewegung zu einer Durchführung des Positionsermittlungsschritts 38 von der Recheneinheit 30 verwendet. Werden zumindest drei Drehbewegung von drei separaten Wälzelementen erfasst, verwendet die Recheneinheit 30 einen Mittelwert mehrere Werte der Drehbewegung, die größer sind als der kleinste Wert. Der Positionsermittlungsschritt 38 wird, insbesondere nur, ausgelöst, wenn in dem Drehermittlungsschritt 36 eine Mindestdrehbewegung zumindest eines der Wälzelemente 16, 28 ermittelt wird. In dem Positionsermittlungsschritt 38 wird ein durch das Materialuntersuchungsgerät 12 zurückgelegter Weg ermittelt. Insbesondere ermittelt die Recheneinheit 30 den zurückgelegten Weg in Abhängigkeit von der im Vergleichsschritt 40 ermittelten nicht-kleinsten, insbesondere größten oder gemittelten, Drehbewegung.

## Patentansprüche

1. Handhaltbares Materialuntersuchungsgerät (12), insbesondere Ortungsgerät und/oder Feuchtigkeitsmesser, mit zumindest einer Positionsermittlungsvorrichtung (10), mit zumindest einem Fahrgestell (22) und mit zumindest einem am Fahrgestell (22) gelagerten Wälzelement (16, 28), wobei die Positionsermittlungsvorrichtung (10) dazu eingerichtet ist, einen durch das Materialuntersuchungsgerät (12) zurückgelegten Weg zu erfassen, wobei die Positionsermittlungsvorrichtung (10) zumindest eine Signalgebereinheit (14) zu einer Anordnung an dem Wälzelement (16) des Materialuntersuchungsgeräts (12) und zumindest eine Sensoreinheit (18) umfasst, wobei die Signalgebereinheit (14) zumindest ein Signalgeberelement (20) zu einer Änderung eines Messsignals in Abhängigkeit von einer Drehposition des Wälzelements (16) umfasst und wobei die Sensoreinheit (20) zu einer Anordnung an dem Fahrgestell (22) des Materialuntersuchungsgeräts (12) und zu einer Erfassung des Messsignals vorgesehen ist, wobei das Signalgeberelement (20) als induktives Signalgeberelement und die Sensoreinheit (18) als induktive Sensoreinheit ausgebildet sind, welche zu einer induktiven Kopplung miteinander eingerichtet sind, **gekennzeichnet durch** eine Recheneinheit (30), die dazu ausgebildet ist, einen Vergleichsschritt (40) durchzuführen, bei welchem ein kleinster Wert von mehreren ermittelten Drehbewegungen unterschiedlicher Wälzelemente (16, 28) des Materialuntersuchungsgeräts verworfen wird.

2. Handhaltbares Materialuntersuchungsgerät (12) nach Anspruch 1, **dadurch gekennzeichnet, dass** die Signalgebereinheit (14) eine eine Drehbewegung des Wälzelements (16) vorgebende Drehachse (24) umfasst, in welche das Signalgeberelement (20) in radialer Richtung der Drehachse (24) maximal im Wesentlichen bündig integriert ist.

3. Handhaltbares Materialuntersuchungsgerät (12) nach Anspruch 1 oder 2, **dadurch gekennzeichnet, dass** die Signalgebereinheit (14) eine eine Drehbewegung des Wälzelements (16) vorgebende Drehachse (24) umfasst, an welcher das Signalgeberelement (20) angeordnet ist und welche als Achsstumpf ausgebildet ist.

4. Handhaltbares Materialuntersuchungsgerät (12) nach einem der vorhergehenden Ansprüche, **dadurch gekennzeichnet, dass** die Signalgebereinheit (14) eine eine Drehbewegung des Wälzelements (16) vorgebende Drehachse (24) umfasst, welche mit dem Wälzelement (16) einstückig ausgebildet ist, wobei das Signalgeberelement (20) an einem von dem Wälzelement (16) abgewandten Ende der Drehachse (24) angeordnet ist.

5. Handhaltbares Materialuntersuchungsgerät (12) nach einem der vorhergehenden Ansprüche, **dadurch gekennzeichnet, dass** die Signalgebereinheit (14) zumindest ein induktives weiteres Signalgeberelement (26) umfasst, welches zu einer Anordnung an einem von dem Wälzelement (16) separaten weiteren Wälzelement (28) des Materialuntersuchungsgeräts (12) angeordnet ist.

6. Handhaltbares Materialuntersuchungsgerät (12) nach Anspruch 5, **gekennzeichnet durch** zumindest eine Recheneinheit (30) zu einem Vergleich des Messsignals von dem Signalgeberelement (20) mit einem weiteren Messsignal von dem weiteren Signalgeberelement (26).

7. Handhaltbares Materialuntersuchungsgerät (12) nach einem der vorhergehenden Ansprüche, **gekennzeichnet durch** zumindest ein Gleitlager (32) zu einer reversiblen Lagerung der Signalgebereinheit (14) an dem Fahrgestell (22).

8. Handhaltbares Materialuntersuchungsgerät nach einem der vorhergehenden Ansprüche, **dadurch gekennzeichnet, dass** ein Gehäuseelement (60) eines Gehäuses (50) des Materialuntersuchungsgeräts (12) zusammen mit dem Fahrgestell (22) einen Innenraum ausbildet, in welchem die Positionsermittlungsvorrichtung (10) zumindest teilweise angeordnet ist.

9. Verfahren zum Betrieb einer Positionsermittlungsvorrichtung (10) für ein handhaltbares Materialuntersuchungsgerät (12) nach einem der vorhergehenden Ansprüche, wobei in zumindest einem Verfahrensschritt ein Messsignal von einem Signalgeberelement (20, 26) des Materialuntersuchungsgeräts (12) in Abhängigkeit von einer Drehposition eines Wälzelements (16, 28) des Materialuntersuchungsgeräts (12) geändert wird, in zumindest einem Drehermittlungsschritt (36) das Messsignal von einer Sensoreinheit (18) des Materialuntersuchungsgeräts (12) erfasst wird und in zumindest einem Positionsermittlungsschritt (38) ein durch das Materialuntersuchungsgerät (12) zurückgelegter Weg ermittelt wird, wobei das Signalgeberelement (20, 26) und die Sensoreinheit (18) in zumindest einem Verfahrensschritt induktiv koppeln, um das Messsignal zu erzeugen, **gekennzeichnet durch** einen Vergleichsschritt (40), bei welchem ein kleinster Wert von mehreren ermittelten Drehbewegungen unterschiedlicher Wälzelemente (16, 28) des Materialuntersuchungsgeräts verworfen wird.

10. Verfahren nach Anspruch 9, **dadurch gekennzeichnet, dass** der Positionsermittlungsschritt (38) ausgelöst wird, wenn in dem Drehermittlungsschritt (36) eine Mindestdrehbewegung des Wälzelements (16, 28) ermittelt wird.

11. Verfahren nach einem der Ansprüche 9 bis 10, **gekennzeichnet durch** einen dem Drehermittlungsschritt (36) nachgelagerten Aktualisierungsschritt (42), in welchem die aktuelle Drehposition des Wälzelements (16, 28) des Materialuntersuchungsgeräts als Winkelreferenz für einen nächsten Drehermittlungsschritt (36) gespeichert wird.

## Claims

1. Handheld material testing apparatus (12), in particular locating apparatus and/or moisture meter, having at least one position determining device (10), having at least one chassis (22) and having at least one rolling element (16, 28) mounted on the chassis (22), wherein the position determining device (10) is designed to detect a path travelled by the material testing apparatus (12), wherein the position determining device (10) comprises at least one signal generator unit (14) for arrangement on the rolling element (16) of the material testing apparatus (12) and at least one sensor unit (18), wherein the signal generator unit (14) comprises at least one signal generator element (20) for changing a measurement signal as a function of a rotational position of the rolling element (16) and wherein the sensor unit (20) is intended for arrangement on the chassis (22) of the material testing apparatus (12) and for detecting the measurement signal, wherein the signal generator element (20) is designed as an inductive signal generator element and the sensor unit (18) is designed as an inductive sensor unit, the signal generator element and sensor unit being configured to be inductively coupled to each other, **characterized by** a computing unit (30), which is designed to carry out a comparison step (40) in which a smallest value from amongst several determined rotational movements of different rolling elements (16, 28) of the material testing apparatus is discarded.

2. Handheld material testing apparatus (12) according to Claim 1, **characterized in that** the signal generator unit (14) comprises a rotation shaft (24) which specifies a rotational movement of the rolling element (16) and into which the signal generator element (20) is integrated at most substantially flush in the radial direction of the rotation shaft (24).

3. Handheld material testing apparatus (12) according to Claim 1 or 2, **characterized in that** the signal generator unit (14) comprises a rotation shaft (24) which specifies a rotational movement of the rolling element (16) and on which the signal generator element (20) is arranged and which is designed as a shaft stub.

4. Handheld material testing apparatus (12) according to any of the preceding claims, **characterized in that** the signal generator unit (14) comprises a rotation shaft (24) which specifies a rotational movement of the rolling element (16) and is formed in one piece with the rolling element (16), wherein the signal generator element (20) is arranged at an end of the rotation shaft (24) remote from the rolling element (16).

5. Handheld material testing apparatus (12) according to any of the preceding claims, **characterized in that** the signal generator unit (14) comprises at least one inductive further signal generator element (26) which is arranged for arrangement on a further rolling element (28) of the material testing apparatus (12) separate from the rolling element (16).

6. Handheld material testing apparatus (12) according to Claim 5, **characterized by** at least one computing unit (30) for comparing the measurement signal from the signal generator element (20) with a further measurement signal from the further signal generator element (26).

7. Handheld material testing apparatus (12) according to any of the preceding claims, **characterized by** at least one plain bearing (32) for reversibly mounting the signal generator unit (14) on the chassis (22).

8. Handheld material testing apparatus according to any of the preceding claims, **characterized in that** a housing element (60) of a housing (50) of the material testing apparatus (12), together with the chassis (22), forms an interior space in which the position determining device (10) is at least partially arranged.

9. Method for operating a position determining device (10) for a handheld material testing apparatus (12) according to any of the preceding claims, wherein in at least one method step a measurement signal from a signal generator element (20, 26) of the material testing apparatus (12) is changed as a function of a rotational position of a rolling element (16, 28) of the material testing apparatus (12), in at least one rotation determining step (36) the measurement signal from a sensor unit (18) of the material testing apparatus (12) is detected, and in at least one position determining step (38) a distance travelled by the material testing apparatus (12) is determined, wherein the signal generator element (20, 26) and the sensor unit (18) are inductively coupled in at least one method step in order to generate the measurement signal, **characterized by** a comparison step (40) in which a smallest value from amongst several determined rotational movements of different rolling elements (16, 28) of the material testing apparatus is discarded.

10. Method according to Claim 9, **characterized in that** the position determining step (38) is initiated when a minimum rotational movement of the rolling element (16, 28) is determined in the rotation determining step (36).

11. Method according to either of Claims 9 and 10, **characterized by** an updating step (42) following the rotation determining step (36), in which updating step the current rotational position of the rolling element (16, 28) of the material testing apparatus is stored as an angular reference for a next rotation determining step (36).

## Revendications

1. Appareil portatif d'inspection de matériaux (12), en particulier appareil de localisation et/ou hygromètre, avec au moins un appareil de détermination de position (10), avec au moins un châssis (22) et avec au moins un élément roulant (16, 28) monté sur le châssis (22), l'appareil de détermination de position (10) étant mis au point pour détecter un trajet parcouru par l'appareil d'inspection de matériaux (12), le dispositif de détermination de position (10) comprenant au moins une unité d'émission de signaux (14) destinée à être disposée sur l'élément roulant (16) du dispositif d'inspection de matériaux (12) et au moins une unité de détection (18), l'unité d'émission de signaux (14) comprenant au moins un élément d'émission de signaux (20) destiné à modifier un signal de mesure en fonction d'une position de rotation de l'élément roulant (16), et l'unité de détection (20) est prévue pour être disposée sur le châssis (22) de l'appareil d'inspection de matériaux (12) et pour détecter le signal de mesure, l'élément d'émission de signaux (20) étant formé comme élément d'émission de signaux inductif et l'unité de détection (18) comme unité de détection inductive, qui sont mis au point pour être couplés l'un à l'autre de manière inductive, **caractérisé par** une unité de calcul (30) qui est formée pour effectuer une étape de comparaison (40) dans laquelle une valeur la plus petite de plusieurs mouvements de rotation déterminés de différents éléments roulants (16, 28) de l'appareil d'inspection de matériaux est rejetée.

2. Appareil portatif d'inspection de matériaux (12) selon la revendication 1, **caractérisé en ce que** l'unité d'émission de signaux (14) comprend un axe de rotation (24) spécifiant un mouvement de rotation de l'élément roulant (16), dans lequel l'élément d'émission de signaux (20) est intégré au maximum sensiblement à fleur dans la direction radiale de l'axe de rotation (24).

3. Appareil portatif d'inspection de matériaux (12) selon la revendication 1 ou 2, **caractérisé en ce que** l'unité d'émission de signaux (14) comprend un axe de rotation (24) spécifiant un mouvement de rotation de l'élément roulant (16), sur lequel est disposé l'élément d'émission de signaux (20) et qui est formé comme une fusée d'essieu.

4. Appareil portatif d'inspection de matériaux (12) selon l'une des revendications précédentes, **caractérisé en ce que** l'unité d'émission de signaux (14) comprend un axe de rotation (24) spécifiant un mouvement de rotation de l'élément roulant (16), lequel est formé d'un seul tenant avec l'élément roulant (16), l'élément d'émission de signaux (20) étant disposé sur une extrémité de l'axe de rotation (24) opposée à l'élément roulant (16).

5. Appareil portatif d'inspection de matériaux (12) selon l'une des revendications précédentes, **caractérisé en ce que** l'unité d'émission de signaux (14) comprend au moins un autre élément inductif d'émission de signaux (26), qui est disposé pour être disposé sur un autre élément roulant (28), séparé de l'élément roulant (16), de l'appareil d'inspection de matériaux (12).

6. Appareil portatif d'inspection de matériaux (12) selon la revendication 5, **caractérisé par** au moins une unité de calcul (30) destinée à comparer le signal de mesure provenant de l'élément d'émission de signaux (20) à un autre signal de mesure provenant de l'autre élément d'émission de signaux (26).

7. Appareil portatif d'inspection de matériaux (12) selon l'une des revendications précédentes, **caractérisé par** au moins un palier lisse (32) destiné à monter de manière réversible l'unité d'émission de signaux (14) sur le châssis (22).

8. Appareil portatif d'inspection de matériaux selon l'une des revendications précédentes, **caractérisé en ce qu'**un élément (60) de boîtier d'un boîtier (50) de l'appareil d'inspection de matériaux (12) forme conjointement avec le châssis (22) un espace intérieur, dans lequel est disposé au moins en partie le dispositif de détermination de position (10).

9. Procédé destiné à faire fonctionner un appareil de détermination de position (10) pour un appareil portatif d'inspection de matériaux (12) selon l'une des revendications précédentes, un signal de mesure provenant d'un élément d'émission de signaux (20, 26) de l'appareil d'inspection de matériaux (12) étant modifié en fonction d'une position de rotation d'un élément roulant (16, 28) de l'appareil d'inspection de matériaux (12) dans au moins une étape de procédé, le signal de mesure étant détecté par une unité de détection (18) de l'appareil d'inspection de matériaux (12) dans au moins une étape de détermination de rotation (36) et un trajet parcouru par l'appareil d'inspection de matériaux (12) étant déterminé dans au moins une étape de détermination de position (38), l'élément d'émission de signaux (20, 26) et l'unité de détection (18) étant couplés de manière inductive dans au moins une étape de procédé pour générer le signal de mesure, **caractérisé par** une étape de comparaison (40), dans laquelle une valeur la plus petite de plusieurs mouvements de rotation déterminés de différents éléments roulants (16, 28) de l'appareil d'inspection de matériaux est rejetée.

10. Procédé selon la revendication 9, **caractérisé en ce que** l'étape de détermination de position (38) est déclenchée lorsqu'un mouvement de rotation minimal de l'élément roulant (16, 28) est déterminé dans l'étape de détermination de rotation (36).

11. Procédé selon l'une des revendications 9 à 10, **caractérisé par** une étape de mise à jour (42) située en aval de l'étape de détermination de rotation (36), dans laquelle la position de rotation actuelle de l'élément roulant (16, 28) de l'appareil d'inspection de matériaux est mémorisée comme référence angulaire pour une étape de détermination de rotation (36) suivante.
